# EUROPÄISCHE PATENTSCHRIFT

(11) **EP 3 967 434 B1**
(45) Veröffentlichungstag und Bekanntmachung des Hinweises auf die Patenterteilung: **27.12.2023**
(21) Anmeldenummer: 21195519.0
(22) Anmeldetag: 08.09.2021
(51) Int. Cl.: B23K 1/005, B23K 1/018

(54) **VERFAHREN ZUM ZERSTÖRUNGSFREIEN TRENNEN EINER LÖTVERBINDUNG**
METHOD FOR NON-DESTRUCTIVE SEPARATION OF A BRAZED JOINT
PROCÉDÉ DE SÉPARATION NON DESTRUCTIVE D'UN ASSEMBLAGE BRASÉ

(30) Priorität: 10.09.2020 DE 102020211378
(43) Veröffentlichungstag der Anmeldung: 16.03.2022
(73) Patentinhaber: Fraunhofer-Gesellschaft zur Förderung der angewandten Forschung e.V., 80686 München (DE)
(72) Erfinder: Paizs, Tibor, 09126 Chemnitz (DE); Puschmann, Markus, 09126 Chemnitz (DE)
(74) Vertreter: Pfenning, Meinig & Partner mbB

(56) Entgegenhaltungen:
- FR-A1- 2 911 294
- US-A1- 2011 079 635
- US-B1- 10 160 053

## Beschreibung

Die Erfindung betrifft ein Verfahren zum zerstörungsfreien Trennen einer Lötverbindung, wobei die stoffschlüssige Lötverbindung an mindestens zwei metallischen Bauteilen vorhanden ist. Die damit getrennten Bauteile stehen für eine mechanische Bearbeitung im Kreislauf zur Verfügung.

Aktuell gibt es sowohl in der Forschung, als auch in der Industrie große Bestrebungen, die Kreislaufwirtschaft voranzutreiben. Unter Kreislaufwirtschaft, die auch Refabrikation oder auch Remanufactoring bezeichnet, ist die Aufarbeitung von Produkten am Ende des Produktlebenszyklus zu verstehen.

Nach aktuellem Stand der Technik werden Schweißbaugruppen, wie z.B. Fahrzeugkarosserien am Ende des Produktlebenszyklus gepresst, zum Stahlwerk transportiert und eingeschmolzen. Lacke und Kunststoffteile werden in der Regel "thermisch verwertet". Nach dem Gießen von Barren werden diese gewalzt und in Form von gewickelten Coils zu den jeweiligen verarbeitenden Betrieben befördert. Auch wenn durch diesen Prozess Metalle über viele Produktlebenszyklen verwendet werden können, muss als Nachteil ein erheblicher Ausstoß von umweltschädlichen Treibhausgasen genannt werden. Eine Möglichkeit zur Verkürzung der Wertschöpfungskette ist die zerstörgungsfreie Demontage von stoffschlüssigen Verbindungen. Großes Potential bietet die Demontage von stoffschlüssig gefügten PKW-Karosserien und die Wiederverwendung der bereits lackierten Einzelteile. Insbesondere Bauteile mit geringem Umformgrad, wie z.B. ein Autodach können nach zerstörungsfreier Demontage erneut umgeformt und mit neuer Formgebung wiederverwendet werden (oder ohne erneute Formgebung als Autodach in einem anderen Fahrzeug).

Da die etablierten Fügeverbindungen nicht lösbar sind, ist eine zerstörungsfreie Demontage von stoffschlüssigen Fügeverbindungen nach aktuellem Stand der Technik technisch nicht realisierbar. Die bisher entwickelten lösbaren Fügeverbindungen von Metallen sind entweder im Vergleich zum thermischen Fügen kostenintensiv (z.B. Schrauben), erfordern eine höhere Prozesszeit oder sind als Sonderlösungen mit wenigen industriellen Anwendungsbereichen zu bezeichnen. Nach aktuellem Stand der Technik sind keine wirtschaftlichen Alternativen für lösbare Fügeverbindungen bekannt.

Durch die zugrundeliegende Erfindung einer Technologie zum Fügen und zerstörungsfreien Lösen von stoffschlüssigen Fügeverbindungen soll eine zerstörungsfreie Demontage von metallischen Baugruppen, insbesondere von Karosserien, ermöglicht werden. Die Wertschöpfungskette soll verkürzt und somit die Freisetzung von Treibhausgasen vermindert werden.

Da die Schmelztemperatur des Bauteilwerkstoffs (z.B. Stahl mit ca. 1600 °C) deutlich höher als die Schmelztemperatur eines zum stoffschlüssigen Verbinden geeigneten Lotwerkstoffs ist (z.B. kupferbasierte Hartlote mit ca. 900 °C), ist die Entfernung des Lotwerkstoffs ohne Beschädigung des jeweiligen Bauteilwerkstoffes möglich.

So ist es aus US 2011/0079635 A1 bekannt, wie man Metallplatten trennen kann.

US 10 160 053 B1 betrifft die Beseitigung von Defekten an gelöteten mikroelektronischen Elementen.

Es ist daher Aufgabe der Erfindung, Möglichkeiten zum zerstörungsfreien Trennen von Lötverbindungen an Bauteilen anzugeben, mit denen das Trennen einfach, sicher, mit hoher Effektivität und so erreicht werden kann, dass die damit getrennten Bauteile ggf. auch nach einer weiteren mechanischen Bearbeitung, insbesondere einer Umformung weiter genutzt werden können.

Erfindungsgemäß wird diese Aufgabe mit einem Verfahren, das die Merkmale des Anspruchs 1 aufweist, gelöst. Vorteilhafte Ausgestaltungen und Weiterbildungen können mit in davon abhängigen Ansprüchen bezeichneten Merkmalen realisiert werden.

Die Erfindung beschreibt eine Technologie zum zerstörungsfreien Lösen von insbesondere stoffschlüssig gefügten Blechen. Das Fügen der Bleche erfolgte mit einem Lötprozess, idealerweise mittels Laserlöten. Das Fügen der Bleche mit einem Lötprozess ist die Vorrausetzung für den im Folgenden beschriebenen Prozess zum zerstörungsfreien Trennen einer solchen Fügeverbindung.

Bei dem erfindungsgemäßen Verfahren wird der Brennfleck eines Laserstrahls mit einer zum Schmelzen eines Lotwerkstoffs ausreichenden und einer zumindest ein Schmelzen eines Bauteilwerkstoffs vermeidenden Leistungsdichte im Brennfleck und einer Vorschubbewegung des Brennflecks auf einen Fügeberreich der stoffschlüssigen Verbindung gerichtet. Dabei sollte eine Temperatur erreicht werden, bei der der Lotwerkstoff eine zum Entfernen geeignete Viskosität aufweist. Die Temperatur im mittels der Energie des Laserstrahls erwärmten metallischen Bauteilwerkstoff sollte jedoch neben dem Schmelzen von Bauteilwerkstoff auch eine Veränderung des Gefüges des Bauteilwerkstoffs vermeiden.

Bei dem Verfahren wird der geschmolzene Lotwerkstoff mittels mindestens einer Fluidströmung, die eine kinetische Energie aufweist, aus dem Fügebereich entfernt wird.

Die Bauteile werden kontinuierlich fortschreitend oder nach dem vollständigen Trennen der stoffschlüssigen Lotverbindung voneinander getrennt. Nach dem vollständigen Trennen wird mindestens eines der Bauteile einer Wiederverwendung zugeführt.

Die Fluidströmung kann in unterschiedlicher Weise wirksam werden, worauf für mehrere Alternativen nachfolgend noch Bezug genommen wird.

So kann die Fluidströmung in einer erfindungsgemäßen Alternative in Richtung der Vorschubbewegung des Laserstrahlbrennflecks und/oder in einem Winkel im Bereich 15° bis 45° in Bezug zu einer Oberfläche eines Bauteils, auf der eine Lotnaht oder punktförmige stoffschlüssige Verbindungen mit dem Lotwerkstoff aufgebracht worden ist/sind, auf den mittels der Energie des Laserstrahls geschmolzenen flüssigen Lotwerkstoff gerichtet werden. Der flüssige Lotwerkstoff wird dabei von der Bauteiloberfläche weggeblasen.

Die Fluidströmung kann aber auch in einer weiteren erfindungsgemäßen Alternative in Richtung der Vorschubbewegung des Laserstrahlbrennflecks koaxial zur optischen Achse des Laserstrahls ausgerichtet werden, wenn der Laserstrahl mit einem Winkel im Bereich 15 ° bis 45 ° in Bezug zur Oberfläche eines Bauteils, auf der eine Lotnaht oder punktförmige stoffschlüssige Verbindungen mit dem Lotwerkstoff aufgebracht worden ist/sind, auf den mittels der Energie des Laserstrahls geschmolzenen flüssigen Lotwerkstoff gerichtet ist.

Die Fluidströmung weist dabei eine Strömungsgeschwindigkeit und einen Massenstrom auf, mit der der verflüssigte Lotwerkstoff entsprechend seiner Dichte und Viskosität entfernt werden kann.

Zusätzlich kann mittels der Energie des Laserstrahls geschmolzener flüssiger Lotwerkstoff mittels einer Fluidströmung gemeinsam mit der Fluidströmung in mindestens eine Düse einer synchron zum Laserstrahlbrennfleck bewegten Absaugeinrichtung entfernt werden, wobei ein vorgebbarer Abstand zwischen der mindestens einen Düse und dem Laserstrahlbrennfleck eingehalten werden sollte. Die Absaugeinrichtung ist dazu an eine gegenüber der Umgebung einen Unterdruck erzeugende Einrichtung, wie z.B. saugseitig an einen Verdichter, angeschlossen.

Hierbei handelt es sich um eine mit Gas gebildete Fluidströmung. Ein Gas sollte bevorzugt auch für die vorab erläuterte Alternative, bei der mit der Fluidströmung flüssiger Lotwerkstoff weggeblasen werden kann.

Wird ein Fluidstrom in Richtung flüssigem Lotwerkstoff gerichtet, also flüssiger Lotwerkstoff weggeblasen, können die einzelnen Tropfen und ggf. bereits wieder erstarrte aus Tropfen gebildete Partikel mittels Absaugeinrichtung entfernt werden.

Abgesaugter Lotwerkstoff kann einer Wiederverwendung zugeführt werden.

Der Laserstrahlbrennfleck kann entlang einer Lotnaht oder zu einzelnen in Abständen zueinander angeordneten mit dem Lotwerkstoff gebildeten punktförmigen stoffschlüssigen Verbindungen bewegt werden. Dabei sollten alle stoffschlüssigen Verbindungen zwischen den Bauteilen gelöst werden.

Das Entlöten der Lötverbindungen kann, wie bereits angesprochen, in einer ersten Variante durch Erwärmung des Lotwerkstoffs durch einen Laserstrahl und Ausblasen des verflüssigten Lotwerkstoffs mittels mindestens einer Gasdüse zugeführten Fluidströmung mit möglichst hoher kinetischer Energie/ Strömungsgeschwindigkeit erreicht werden. Die Düse sollte dabei so ausgerichtet sein, dass der verflüssigte Lotwerkstoff in oder entgegen Vorschubbewegungssrichtung entlang der ursprünglich vorhandenen Lotnaht ausgeblasen wird. Die entfernten schmelzflüssigen oder bereits wieder erstarrten Partikel können mit einer in Ausblasrichtung angeordneten Absaugeinrichtung direkt im Prozess aufgefangen werden.

Ein Ausblasen des verflüssigten Lotwerkstoffs auf der Blechunterseite, wie es beispielsweise beim Laserstrahlschneiden Anwendung findet, ist bei der Erfindung nicht zielführend.

In dem die Prozesstemperatur durch die temperaturabhängige Regelung der Laserleistung unterhalb des Schmelztemperatur von Stahl eingestellt wird, kann der Prozess optimiert werden. Durch Anpassung der Laserbrennfleckgeometrie durch Strahlformung, Beeinflussung der Vorschubbewegungsgeschwindigkeit des Laserstrahlbrennflecks und/oder eine oszillierende Bewegung des Laserstrahlbrennflecks können ebenfalls Verbesserungen des Prozesses erreicht werden. Dadurch kann die in den Lot- und Bauteilwerkstoff eingebrachte Energiemenge beeinflusst werden. Durch Anpassung der Laserstrahlbrennfleckgeometrie, die Größe der Fläche des Laserstrahlbrennflecks kann die Leistungsdichte im Laserstrahlbrennfleck zusätzlich zur Laserleistung beeinflusst werden.

Eine weitere Möglichkeit den auf mindestens seine Schmelztemperatur erwärmten Lotwerkstoff aus dem Füge- bzw. Verbindungsbereich zu entfernen, ist das Absaugen des flüssigen Lotwerkstoffs mit einer geeigneten Absaugeinrichtung. Diese sollte so gestaltet sein, dass der verflüssigte Lotwerkstoff direkt in der Wirkzone des Laserstrahlbrennflecks abgesaugt werden kann. Die Absaugrichtung kann dabei koaxial zur Einstrahlrichtung des Laserstrahls ausgerichtet sein. Sie kann aber auch, wie die Ausblasrichtung in einem Winkel zur Einstrahlachse des Laserstrahls geneigt sein. Wichtig ist, dass ein möglichst hoher Saugdruck mit großer Druckdifferenz zur Umgebungsatmosphäre auf den zu entfernenden verflüssigten Lotwerkstoff realisiert werden kann. Da mindestens eine Düse der Absaugeinrichtung relativ nah in einem vorgegebenen Abstand zum Brennfleck des Laserstrahls (0,5 mm - 2 mm) an die Wirkzone des Laserstrahlbrennflecks positioniert werden sollte, sollte die mindestens eine Düse aus einem möglichst temperaturbeständigen Material bestehen (z.B. Keramik). Eine aktive Kühlung der thermisch beanspruchten Komponenten insbesondere der mindestens einen Düse der Absaugeinrichtung kann von Vorteil sein. Zur Kühlung kann ein Fluid der mindestens einen Düse zu- und wieder abgeführt werden.

Mindestens eine Düse sollte synchron mit dem vorgegebenen Abstand zum Laserbrennfleck bewegt werden.

Das in die mindestens eine Düse eingesaugte gasförmige Fluid sollte mit einer Strömungsgeschwindigkeit und einem Massenstrom eingesaugt werden, mit der/dem eine Entfernung des geschmolzenen Lotwerkstoffs oder bereits durch Erstarren wieder ausgebildete Partikel, die aus dem Lotwerkstoff bestehen, möglich ist. Dabei kann die mindestens eine Düse in einem Winkel < 10° in Bezug zur Oberfläche eines Bauteils, auf der eine Lotnaht oder punktförmige stoffschlüssige Verbindung mit dem Lotwerkstoff ausgebildet worden ist, ausgerichtet sein.

Mehrere Düsen einer Absaugeinrichtung können in einer Reihe nebeneinander und parallel zur Oberfläche, an der der Lotwerkstoff angeordnet ist, angeordnet sein. Mindestens eine Düse kann auch als Schlitzdüse ausgebildet sein, deren Schlitz parallel zur Oberfläche ausgerichtet ist, an der der Lotwerkstoff angeordnet ist.

Bei Bauteilen mit gebogenen Oberflächen kann auch ein Verschwenken solcher mehrerer in Reihe angeordneten Düsen oder einer Schlitzdüse für eine dortige tangentiale oder parallele Ausrichtung in Bezug zur gebogenen Bauteiloberfläche sinnvoll und vorteilhaft sein. Die Düse(n) wird/werden dazu um eine parallel zur Bauteiloberfläche ausgerichtete Achse verschwenkt.

Mit der Erfindung können diverse Vorteile erzielt werden:
→ Lösen von Laserlötnähten oder mindestens von einer Seite zugänglichen Lötverbindungen ohne die Beschädigung der Einzelteile
→ Es müssen keine neuartigen Fügetechnologien etabliert werden (Laserlöten ist zumindest im Karosseriebau etabliert)
→ Optimierung der Wiederverwendbarkeit von stoffschlüssig gefügten Baugruppen

Die Erfindung kann in allen Bereichen der Industrie eingesetzt werden, bei denen die Anforderung besteht, stoffschlüssig gefügte Bauteile zerstörungsfrei wieder voneinander zu lösen:
→ Automobilindustrie: Karosseriebau
→ Allgemeiner Maschinenbau: Rohre und Schächte von Gebäudeklimatisierungen, Wärmetauscher
→ Schienenfahrzeugbau, Wagonbau
→ Nutzfahrzeugbau

## Patentansprüche

1. Verfahren zum zerstörungsfreien Trennen einer Lötverbindung an mindestens zwei mittels Löten stoffschlüssig verbundenen metallischen Bauteilen, so dass die getrennten Bauteile für eine mechanische Bearbeitung im Kreislauf zur Verfügung stehen, bei dem der Brennfleck eines Laserstrahls mit einer zum Schmelzen eines Lotwerkstoffs ausreichenden und einer zumindest ein Schmelzen eines Bauteilwerkstoffs vermeidenden Leistungsdichte im Brennfleck und einer Vorschubbewegung des Brennflecks auf einen Fügeberreich der stoffschlüssigen Verbindung gerichtet wird und
der geschmolzene Lotwerkstoff mittels mindestens einer Fluidströmung, die eine kinetische Energie aufweist, aus dem Fügebereich entfernt wird und
die Bauteile kontinuierlich fortschreitend oder erst nach dem vollständigen Trennen der stoffschlüssigen Lotverbindung voneinander getrennt werden und
mindestens eines der Bauteile einer Wiederverwendung zugeführt wird, wobei
die Fluidströmung in Richtung der Vorschubbewegung des Laserstrahlbrennflecks und/oder in einem Winkel im Bereich 15° bis 45° in Bezug zu einer Oberfläche eines Bauteils, auf der eine Lotnaht oder punktförmige stoffschlüssige Verbindungen mit dem Lotwerkstoff aufgebracht worden ist/sind, auf den mittels der Energie des Laserstrahls geschmolzenen flüssigen Lotwerkstoff gerichtet wird
oder
die Fluidströmung in Richtung der Vorschubbewegung des Laserstrahlbrennflecks koaxial zur optischen Achse des Laserstrahls ausgerichtet wird, wenn der Laserstrahl mit einem Winkel im Bereich 15 ° bis 45 ° in Bezug zur Oberfläche eines Bauteils, auf der eine Lotnaht oder punktförmige stoffschlüssige Verbindungen mit dem Lotwerkstoff aufgebracht worden ist/sind, auf den mittels der Energie des Laserstrahls geschmolzenen flüssigen Lotwerkstoff gerichtet ist.

2. Verfahren nach Anspruch 1, **dadurch gekennzeichnet, dass** mittels der Energie des Laserstrahls geschmolzener flüssiger Lotwerkstoff mittels einer Fluidströmung gemeinsam mit der Fluidströmung in mindestens eine Düse einer synchron zum Laserstrahlbrennfleck bewegten Absaugeinrichtung entfernt wird, wobei ein vorgebbarer Abstand zwischen der mindestens einen Düse und dem Laserstrahlbrennfleck eingehalten wird.

3. Verfahren nach einem der vorhergehenden Ansprüche, **dadurch gekennzeichnet, dass** die mindestens eine Fluidströmung mit einem Gas gebildet wird.

4. Verfahren nach einem der vorhergehenden Ansprüche, **dadurch gekennzeichnet, dass** der Laserstrahlbrennfleck oszillierend bewegt wird.

5. Verfahren nach einem der vorhergehenden Ansprüche, **dadurch gekennzeichnet, dass** der Laserstrahlbrennfleck entlang einer Lotnaht oder zu einzelnen in Abständen zueinander angeordneten mit dem Lotwerkstoff gebildeten punktförmigen stoffschlüssigen Verbindungen bewegt wird.

6. Verfahren nach einem der vorhergehenden Ansprüche, **dadurch gekennzeichnet, dass** mehrere in Reihe nebeneinander angeordnete Düsen oder eine Schlitzdüse um eine parallel zur Bauteiloberfläche ausgerichtete Achse verschwenkt werden/wird.

## Claims

1. A method for the non-destructive separation of a soldered joint on at least two metallic components materially bonded by means of soldering, so that the separated components are available for mechanical processing in the circuit, wherein
the focal spot of a laser beam having a power density in the focal spot sufficient to melt a solder material and a power density which avoids at least a melting of a component material and an advancing movement of the focal spot is directed onto a joining region of the materially bonded joint, and
the molten solder material is removed from the joining region by means of at least one fluid flow which has a kinetic energy, and
the components are separated from each other continuously or only after complete separation of the materially bonded solder joint, and
at least one of the components is recycled, wherein
the fluid flow is directed in the direction of the advancing movement of the laser beam focal spot and/or at an angle in the range of 15° to 45° with respect to a surface of a component on which a solder seam or point-shaped material-fit joints with the solder material has/have been applied, onto the liquid solder material melted by means of the energy of the laser beam
or
the fluid flow in the direction of the advancing movement of the laser beam focal spot is aligned coaxially with the optical axis of the laser beam when the laser beam is directed at an angle in the range of 15 ° to 45 ° with respect to the surface of a component on which a solder seam or point-shaped interlocking joints with the solder material has/have been applied, onto the liquid solder material melted by means of the energy of the laser beam.

2. The method according to claim 1, **characterized in that** molten liquid solder material is removed by means of the energy of the laser beam by means of a fluid flow together with the fluid flow into at least one nozzle of a suction device moved synchronously with the laser beam focal spot, wherein a predeterminable distance between the at least one nozzle and the laser beam focal spot is maintained.

3. The method according to any one of the preceding claims, **characterized in that** the at least one fluid flow is formed with a gas.

4. The method according to any of the preceding claims, **characterized in that** the laser beam focal spot is moved in an oscillating manner.

5. The method according to any one of the preceding claims, **characterized in that** the laser beam focal spot is moved along a solder seam or to individual spaced-apart point-like integral joints formed with the solder material.

6. The method according to one of the preceding claims, **characterized in that** several nozzles arranged in a row next to each other or a slot nozzle are/is pivoted about an axis aligned parallel to the component surface.

## Revendications

1. Procédé de séparation non destructive d'une liaison par brasage sur au moins deux composants métalliques reliés par brasage, de sorte que les composants séparés soient disponibles pour un usinage mécanique en circuit fermé, dans lequel
le point focal d'un faisceau laser ayant une densité de puissance suffisante pour faire fondre un matériau de brasage et au moins une densité de puissance évitant une fusion d'un matériau de la pièce au point focal et un mouvement d'avance du point focal sont dirigés sur une zone d'alimentation de la liaison par fusion et
le matériau de brasage fondu est éliminé de la zone d'alimentation au moyen d'au moins un écoulement de fluide présentant une énergie cinétique, et
les éléments de construction sont séparés les uns des autres en permanence ou seulement après la séparation complète de la liaison par brasage, et
au moins un des éléments est destiné à une réutilisation,
l'écoulement de fluide étant dirigé dans la direction du mouvement d'avance du point focal du faisceau laser et/ou selon un angle compris entre 15° à 45° par rapport à une surface d'une pièce sur laquelle un cordon de soudure ou des assemblages par liaison par points ont été appliqués avec le matériau de soudure, sur lequel est dirigé un matériau de soudure liquide fondu au moyen de l'énergie du faisceau laser,
ou
l'écoulement de fluide est orienté dans la direction du mouvement d'avance du point focal du faisceau laser, coaxialement à l'axe optique du faisceau laser, lorsque le faisceau laser est orienté selon un angle compris entre 15° et 45° par rapport à la surface d'une pièce, sur lequel un cordon de soudure ou des liaisons par points avec le matériau de soudure ont été appliqués, est dirigé sur le matériau de soudure liquide fondu au moyen de l'énergie du faisceau laser.

2. Procédé selon la revendication 1, **caractérisé en ce que** le matériau de brasage liquide fondu au moyen de l'énergie du faisceau laser est éliminé au moyen d'un écoulement de fluide conjointement avec l'écoulement de fluide dans au moins une buse d'un dispositif d'aspiration déplacé de manière synchrone avec le point focal du faisceau laser, une distance pouvant être prédéfinie étant maintenue entre la au moins une buse et le point focal du faisceau laser.

3. Procédé selon une des revendications précédentes, **caractérisé en ce que** ledit au moins un écoulement de fluide est produit par un gaz.

4. Procédé selon une des revendications précédentes, **caractérisé en ce que** le point focal du faisceau laser a un mouvement oscillant.

5. Procédé selon une des revendications précédentes, **caractérisé en ce que** le point focal du faisceau laser est déplacé le long d'un cordon de soudure ou vers des liaisons par points individuelles espacées les unes des autres formées avec le matériau de soudure.

6. Procédé selon l'une des revendications précédentes, **caractérisé en ce que** plusieurs buses disposées en ligne les unes à côté des autres ou une buse à fente pivotent autour d'un axe parallèle à la surface de la pièce.
